# EUROPÄISCHE PATENTANMELDUNG

(11) **EP 1 527 923 A2**
(43) Veröffentlichungstag der Anmeldung: **04.05.2005**
(21) Anmeldenummer: 04024340.4
(22) Anmeldetag: 13.10.2004
(51) Int. Cl.: B60J 5/04

(54) **Fahrzeugtür**

(30) Priorität: 30.10.2003 DE 10350712
(71) Anmelder: Bayerische Motoren Werke Aktiengesellschaft, 80809 München (DE)
(72) Erfinder: Reinhard, Manfred, 85098 Grossmehring (DE); Reitemeyer, Heinz-Rainer, 85716 Unterschleissheim (DE)

(57) **Zusammenfassung**

Allgemein bekannt ist eine Fahrzeugtür in Schalenbauweise mit einer Innen- und einer Außenschale. Die Außenschale ist mit einem Verstärkungsteil versteift, das teilweise direkt an der Außenschale anliegt. Aufgabe der Erfindung ist es, eine Fahrzeugtür in Schalenbauweise zu schaffen, die bei einem einfachen Aufbau eine hohe Steifigkeit aufweist.

Erfindungsgemäß besteht eine Fahrzeugtür (**1**) in Schalenbauweise zumindest aus einer Innen- und einer Außenschale (**2** und **3**), wobei die Außenschale (**2**) auf der dem Fahrzeuginnenraum zugewandten Seite mit einem Verstärkungsteil (**4**) versteift ist, das zumindest teilweise direkt an der Außenschale (**2**) anliegt. Das Verstärkungsteil (**4**) dient als Seitenaufprallschutz und besteht einteilig aus einem oberen und einem dazu beabstandeten unteren Träger (**5** und **6**), die an ihren Endbereichen jeweils miteinander verbunden sind, und sich über die gesamte Längserstreckung der Fahrzeugtür (**1**) erstrecken.

## Beschreibung

Die Erfindung betrifft eine Fahrzeugtür gemäß dem Oberbegriff des Patentanspruchs 1.

Aus der EP 0 727 330 B1 ist eine Fahrzeugtür in Schalenbauweise mit einer Innenund einer Außenschale bekannt. Die Außenschale ist mit einem Verstärkungsteil versteift, das teilweise direkt an der Außenschale anliegt.

Aufgabe der Erfindung ist es, eine Fahrzeugtür in Schalenbauweise zu schaffen, die bei einem einfachen Aufbau eine hohe Steifigkeit aufweist.

Diese Aufgabe wird durch eine Fahrzeugtür in Schalenbauweise mit den Merkmalen des Patentanspruchs 1 gelöst.

Erfindungsgemäß besteht eine Fahrzeugtür in Schalenbauweise zumindest aus einer Innen- und einer Außenschale, wobei die Außenschale auf der dem Fahrzeuginnenraum zugewandten Seite mit einem Verstärkungsteil versteift ist, das zumindest teilweise direkt an der Außenschale anliegt. Das Verstärkungsteil dient als Seitenaufprallschutz und besteht einteilig aus einem oberen und einem dazu beabstandeten unteren Träger, sich im wesentlichen über die gesamte Längserstreckung der Fahrzeugtür erstrecken, und die an ihren vorderen und ihren beiden hinteren Endbereichen jeweils miteinander verbunden sind. Der obere Träger verläuft dabei bevorzugt knapp unterhalb der Türbrüstung, sodass er den Türschachtbereich verstärken kann. Zudem erstreckt sich das Verstärkungsteil vorteilhafterweise bis in den Bereich eines Spiegeldreiecks der Fahrzeugtür und / oder bis in den Anbindungsbereich von Türscharnieren und versteift diese Bereiche.

Ein solches Verstärkungsteil, in dem viele einzelne Funktionen integriert sind, kann viele bisher erforderliche einzelne Verstärkungsteile ersetzen. Mit dem Entfall zahlreicher bisher erforderlicher einzelner Verstärkungsteile reduziert sich auch der Aufwand, die Bauteile aufeinander abzustimmen. Das Gewicht der Fahrzeugtür kann so reduziert, und die Kosten können gesenkt werden. Zudem verbessert das einteilige große Verstärkungsteil das Absenk- und Auslenkverhalten der Tür.

Aus dem Stand der Technik sind bereits zahlreiche Türmodule bekannt, die als Vormontageeinheit mehrere Anbau- und Einbauteile einer Fahrzeugtür aufnehmen können. Die meisten Türmodule weisen dazu einen relativ großen Grundträger auf, mit dem das Türmodul auch mit der eigentlichen Fahrzeugtür verbunden ist. Dabei haben manche Grundträger aufgrund einer entsprechenden Gestaltung auch eine die Fahrzeugtür versteifende Funktion. Im Gegensatz zu dem erfindungsgemäßen Verstärkungsteil kommt dabei allerdings der Grundträger nicht unmittelbar hinter der Außenschale im Nassbereich der Fahrzeugtür zum Liegen, sondern derartige Grundträger sind im Trockenbereich üblicherweise zwischen Innenschale und Fensterschacht angeordnet. Diese Anordnung des Grundträgers im Trockenbereich erfolgt aufgrund der elektrischen Bauteile, die am Grundträger angebaut sind. Um einen optimalen Schutz bei einem Seitenaufprall bieten zu können, muss das Verstärkungsteil aber so nahe wie möglich an der Außenschale, und damit im Nassbereich zwischen Außenschale und Fensterschacht, angeordnet sein.

Günstigerweise weist der untere und / oder der obere Träger einen U-förmigen Querschnitt auf. Der Querschnitt kann auch aus mehreren miteinander verbundenen U-förmigen Teilquerschnitten bestehen, sodass der Querschnitt insgesamt wellig ist. Bevorzugt ist der U-förmige Querschnitt entweder zum Fahrzeuginnenraum oder zur Außenschale hin offen. Ein solcher Träger weist bei einer relativ kleinen Querschnittsfläche und damit bei einem relativ geringen Gewicht ein hohes Biegewiderstandsmoment auf und ist somit für einen Seitenaufprallschutz prädestiniert. Die offene Seite des U-förmigen Querschnitts zumindest eines der beiden Träger kann vorteilhafterweise in zumindest einem besonders hoch beanspruchten Bereich mit einem Deckel verschlossen sein, der mit dem Träger verbunden ist. Das dadurch entstehende geschlossene Profil weist gegenüber einem U-förmigen Profil ein deutlich höheres Biegewiderstandsmoment auf. Um sicherzustellen, dass auch bei höchsten Belastungen, wie sie bei einem Seitenaufprall entstehen können, der Hohlraum nicht kollabieren kann, ist günstigerweise der Hohlraum zumindest teilweise mit einem Füllkörper aufgefüllt. Ein solcher Füllkörper kann beispielsweise aus einem geschäumten Kunststoff bestehen.

Das Verstärkungsteil ist günstigerweise ein Blechbauteil, das aus einem Stahl- oder einem Aluminiumwerkstoff bestehen kann. Der Deckel dagegen ist günstigerweise als geometrisch sehr einfaches Bauteil aus einem hochfesten Stahl, sodass die versteifende Wirkung des Deckels möglichst groß ist. Alternativ besteht das ganze Verstärkungsteil aus einem hochfesten Stahlblech. Derartige hochfeste Stahlbleche weisen bei einer relativ gesehen dünnen Blechdicke bereits sehr hohe Festigkeiten auf. Bei der Auswahl der geeigneten Blechgüte muss allerdings darauf geachtet werden, dass der erforderliche Umformgrad beim Tiefziehen prozesssicher erreicht werden kann, ohne dass das Stahlblech einreißt. Wenn dies nicht möglich ist, können beispielsweise auch sogenannte "tailored blanks" zum Einsatz kommen. Diese Platinen bestehen aus unterschiedlichen Blechabschnitten unterschiedlicher Materialgüte und / oder unterschiedlicher Blechdicke, die zu einer Platine zusammengeschweißt wurden, bevor sie zu einem Verstärkungsteil tiefgezogen werden. Durch den Einsatz einer solchen "tailored blank" Platine können in den Bereichen des Verstärkungsteils, die später besonders hohen Beanspruchungen ausgesetzt sind, höherfeste Blechabschnitte zum Einsatz kommen, während in den Bereichen, die beim Tiefziehen eine besonders große Verformbarkeit aufweisen müssen, Blechabschnitte mit niedrigerer Materialgüte zum Einsatz kommen können.

Weitere vorteilhafte Ausgestaltungen sind Gegenstand von Unteransprüchen.

In der Zeichnung ist ein Ausführungsbeispiel der Erfindung dargestellt, anhand dessen die Erfindung im folgenden näher beschrieben wird. Die einzelnen Figuren zeigen in schematischer Darstellungsweise:
- **Fig.** 1: eine Seitenansicht einer Fahrzeugtür mit einem Verstärkungsteil und
- **Fig.** 2: einen Schnitt durch die Fahrzeugtür von **Fig.** 1 entlang der Schnittlinie II - II.

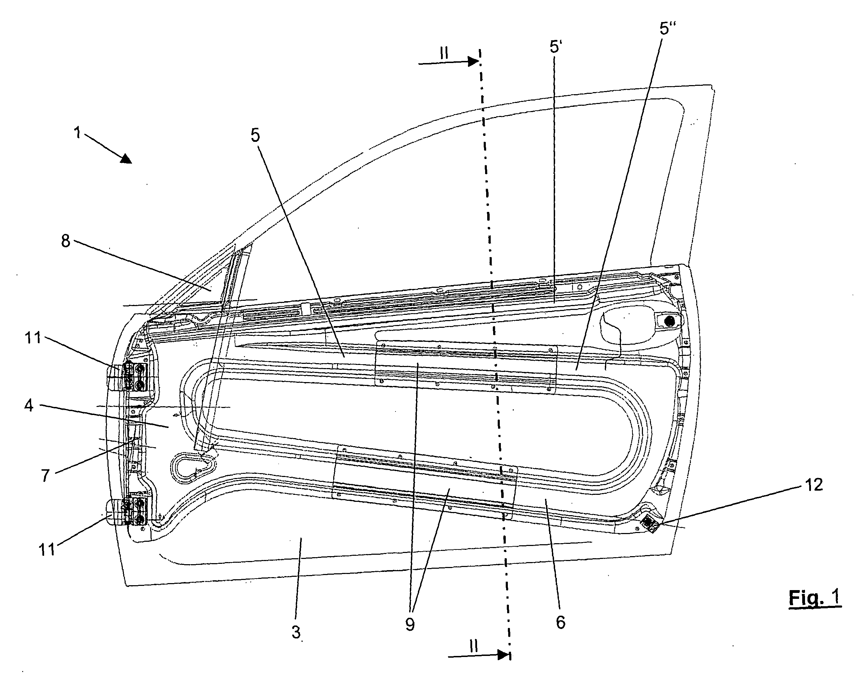

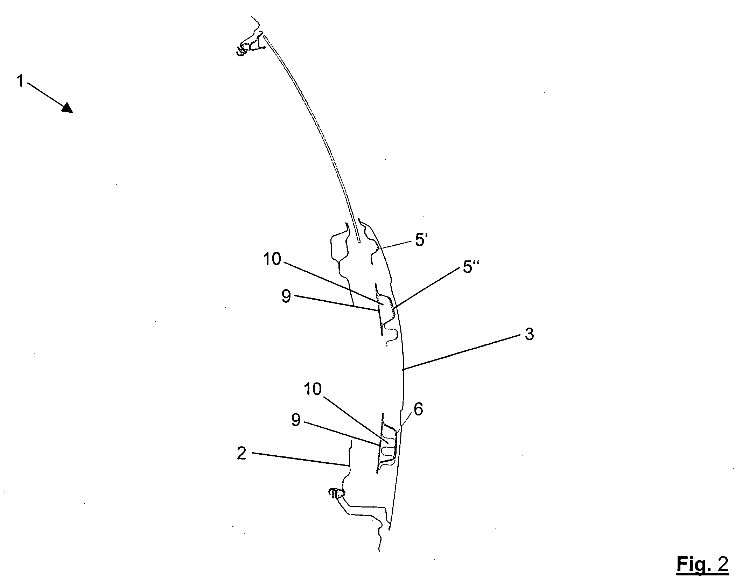

In **Fig.** 1 und **Fig.** 2 ist ein Teil einer vorderen Tür 1 eines Personenkraftwagens dargestellt. Die Tür 1 besteht in Schalenbauweise aus einer Innenschale 2 und einer Außenschale 3. Unmittelbar an die Außenschale 3 angrenzend ist auf der dem Fahrzeuginnenraum zugewandten Seite ein großes Verstärkungsteil 4 angeordnet. Um das Verstärkungsteil 4 möglichst gut zeigen zu können, ist in **Fig.** 1 die Außenschale 3 nur schematisch, und die Innenschale 2 gar nicht dargestellt.

Das Verstärkungsteil 4 ist ein einteiliges Tiefziehteil aus einem Stahlblech einfacherer Güte. Es besteht aus einem oberen Träger 5 und einem dazu beabstandeten unteren Träger 6, die sich über die gesamte Länge der Fahrzeugtür 1 erstrecken und an ihren Endbereichen miteinander verbunden sind. Der obere Träger 5 wird zur hinteren Seite der Fahrzeugtür 1 hin breiter. Dabei gabelt sich der obere Träger 5 im mittleren Bereich in einen oberen Nebenträger 5' und einen oberen Hauptträger 5" auf. Der obere Nebenträger 5' verläuft unmittelbar unterhalb der Türbrüstung und verstärkt so den Türschachtbereich. Der obere Hauptträger 5" verläuft leicht schräg nach hinten. Zudem erstreckt sich das Verstärkungsteil 4 über den Bereich 7 zur Anbindung von Türscharnieren 11 und über den Bereich eines Spiegeldreiecks 8 zur Anbindung eines Außenspiegels. Somit ist zur Versteifung der gesamten Fahrzeugtür 1 nur mehr ein einziges Verstärkungsteil 4 erforderlich, das alle kritischen Bereiche verstärkt.

Der obere Nebenträger 5', der obere Hauptträger 5" und der untere Träger 6 weisen einen U-förmigen Querschnitt auf, der zum Fahrzeuginnenraum hin offen ist. Mit der Grundseite der U-förmigen Querschnitte liegen sie direkt an der Außenschale 3 der Fahrzeugtür 1 an. Im mittleren Bereich des Verstärkungsteils 4, der bei einem Seitenaufprall besonders beansprucht wird, sind die offenen Seiten der U-förmigen Querschnitte des oberen Hauptträgers 5" und des unteren Trägers 6 jeweils mit einem Deckel 9 aus einem hochfesten Stahl geschlossen, sodass ein geschlossener Querschnitt entsteht, der ein besonders hohes Biegewiderstandsmoment aufweist. In den zwischen den Trägern 5" und 6 und den Deckeln 9 entstehenden Hohlräumen ist jeweils ein Füllkörper 10 aus einem geschäumten Kunststoff angeordnet, der den jeweiligen Hohlraum vollkommen ausfüllt. Die beiden Füllkörper 10 verhindern, das auch bei extremen Krafteinwirkungen, wie sie bei einem Seitenaufprall auf die Fahrzeugtür 1 entstehen können, die Hohlräume kollabieren können. So kann sichergestellt werden, dass auch bei höchsten Beanspruchungen das hohe Biegewiderstandsmoment der geschlossenen Querschnitte erhalten bleibt.

Zusätzlich sind an dem Verstärkungsteil andere Bauteile, wie ein Fanghaken 12, eine Fensterführungsschiene, ein Fensterheber, ein Crashsensor, ein Steuergerät, ein Kabelbaum und ein Türaußengriff, befestigt. Die Funktion eines solchen Fanghakens 12 ist beispielsweise in der DE 43 30 620 A1 beschrieben. Zur Aufnahme dieser Bauteile sind im Gegensatz zum Stand der Technik keine separaten Halter erforderlich.

## Patentansprüche

1. Fahrzeugtür (**1**) in Schalenbauweise mit einer Innen- und einer Außenschale (**2** und **3**), wobei die Außenschale (**3**) auf der dem Fahrzeuginnenraum zugewandten Seite mit einem Verstärkungsteil (**4**) versteift ist, das zumindest teilweise direkt an der Außenschale (**3**) anliegt, **dadurch gekennzeichnet, dass** das Verstärkungsteil (**4**) einteilig als Seitenaufprallschutz ausgebildet ist, und einen oberen und einen dazu beabstandeten unteren Träger (**5** und **6**) aufweist, die sich im wesentlichen über die gesamte Längserstreckung der Fahrzeugtür (**1**) erstrecken, wobei die Endbereiche des oberen und des unteren Trägers (**5** und **6**) jeweils miteinander verbunden sind.

2. Fahrzeugtür nach Anspruch 1, **dadurch gekennzeichnet, dass** der obere Träger (**5**) knapp unterhalb der Türbrüstung verläuft.

3. Fahrzeugtür nach Anspruch 1 oder 2, **dadurch gekennzeichnet, dass** das Verstärkungsteil (**4**) sich bis in den Bereich (**8**) eines Spiegeldreiecks der Fahrzeugtür (**1**) erstreckt.

4. Fahrzeugtür nach einem der vorhergehenden Ansprüche, **dadurch gekennzeichnet, dass** das Verstärkungsteil (**4**) sich bis in den Anbindungsbereich (**7**) von Türscharnieren (**11**) erstreckt.

5. Fahrzeugtür nach einem der vorhergehenden Ansprüche, **dadurch gekennzeichnet, dass** der obere und / oder der untere Träger (**5** und / oder **6**) einen U-förmigen oder welligen Querschnitt aufweist.

6. Fahrzeugtür nach Anspruch 5, **dadurch gekennzeichnet, dass** die offene Seite des U-förmigen Querschnitts zumindest einer der beiden Träger (**5, 6**) zumindest abschnittsweise mit einem Deckel (**9**) verschlossen ist, der mit dem Träger (**5, 6**) verbunden ist.

7. Fahrzeugtür nach Anspruch 6, **dadurch gekennzeichnet, dass** der vom Träger (**5, 6**) und Deckel (**9**) umschlossene Hohlraum mit einem Füllkörper (**10**) zumindest teilweise ausgefüllt ist.

8. Fahrzeugtür nach einem der vorhergehenden Ansprüche, **dadurch gekennzeichnet, dass** das Verstärkungsteil (**4**) als Halter für zumindest eine Fensterführungsschiene und / oder für einen Fensterheber dient.

9. Fahrzeugtür nach einem der vorhergehenden Ansprüche, **dadurch gekennzeichnet, dass** das Verstärkungsteil (**4**) zur Aufnahme von zumindest einem Crashsensor, einem Steuergerät, einem Kabelbaum und / oder einem Türaußengriff dient.

10. Fahrzeugtür nach einem der vorhergehenden Ansprüche, **dadurch gekennzeichnet, dass** das Verstärkungsteil (**4**) ein Blechbauteil ist.

11. Fahrzeugtür nach Anspruch 10, **dadurch gekennzeichnet, dass** das Verstärkungsteil (**4**) aus einem normalen Stahlblech besteht, während der Deckel (**9**) aus einem hochfesten Stahlblech besteht.

12. Fahrzeugtür nach Anspruch 10, **dadurch gekennzeichnet, dass** das Verstärkungsteil (**4**) aus einem hochfesten Stahlblech besteht.

13. Fahrzeugtür nach Anspruch 10, **dadurch gekennzeichnet, dass** das Verstärkungsteil (**4**) aus einem "tailored blank" besteht.
